# DEMANDE DE BREVET EUROPEEN

(11) **EP 0 685 657 A1**
(43) Date de publication de la demande: **06.12.1995**
(21) Numéro de dépôt: 95108061.3
(22) Date de dépôt: 26.05.1995
(51) Int. Cl.: F16B 19/10

(54) **Agencement pour le montage et la fixation d'un ensemble sur la caisse d'un véhicule automobile et module d'essuyage comportant un tel agencement**

(30) Priorité: 30.05.1994 FR 9406659
(71) Demandeur: VALEO SYSTEMES D'ESSUYAGE, 78321 La Verrière (FR)
(72) Inventeur: Schon, Wilfried, F-86100 Antran (FR)
(74) Mandataire: Gamonal, Didier

(57) **Abrégé**

L'invention propose un agencement pour le montage et la fixation sur la caisse d'un véhicule automobile d'un ensemble comportant une platine (12) munie de moyens de fixation, caractérisé en ce que la platine (12) est équipée d'au moins un organe de fixation provisoire (18) permettant l'accrochage de la platine (12) sur la caisse du véhicule à l'issue d'une première étape de mise en place de la platine (12) et de moyens (16) de fixation définitive de la platine (12) à l'issue d'une seconde étape de réglage de la position de la platine par rapport à la caisse du véhicule.

## Description

La présente invention concerne un agencement pour le montage et la fixation sur la caisse d'un véhicule automobile d'un ensemble comportant une platine munie de moyens de fixation.

L'invention trouve notamment à s'appliquer pour le montage et la fixation d'un module d'essuyage d'une vitre du véhicule.

Un tel module d'essuyage comporte une platine de support qui porte les différents organes pour l'entraînement en rotation alternée d'au moins un essuie-glace.

Selon une technique connue, la platine comporte une série de trous de fixation prévus pour être traversés par les corps de moyens de fixation du type vis-écrou.

Lors des opérations de montage et de fixation, l'opérateur doit maintenir d'une main le module d'essuyage dans une position correspondant sensiblement à sa position précise de montage et, de l'autre main, mettre en place et visser les éléments appartenant aux liaisons du type vis-écrou.

Cette opération est donc particulièrement pénible pour l'opérateur qui, à l'issue d'une première étape de pré-positionnement du module doit régler de manière précise la position relative de ce dernier par rapport à la caisse du véhicule puis procéder au serrage définitif des liaisons du type vis-écrou.

La présente invention a pour but de proposer un nouvel agencement qui permet de remédier à ces inconvénients.

Dans ce but, l'invention propose un agencement du type mentionné précédemment, caractérisé en ce que la platine est équipée d'au moins un organe de fixation provisoire permettant l'accrochage de la platine sur la caisse du véhicule à l'issue d'une première étape de mise en place de la platine et de moyens de fixation définitive de la platine à l'issue d'une seconde étape, notamment de réglage de la position de la platine par rapport à la caisse du véhicule.

Outre qu'elle remédie aux inconvénients mentionnés précédemment, la conception selon l'invention permet également de faciliter l'automatisation éventuelle des opérations de montage et de fixation, par exemple d'un module d'essuyage.

Selon d'autres caractéristiques de l'invention :
- l'organe de fixation provisoire est mis en oeuvre par déplacement relatif de la platine en direction de la caisse du véhicule ;
- l'organe de fixation provisoire comporte un élément expansible qui est reçu dans un trou complémentaire de la caisse du véhicule ;
- l'élément expansible est susceptible de coulisser par rapport à un élément d'expansion porté par la platine, selon une direction sensiblement parallèle à la direction de déplacement de la platine par rapport à la caisse du véhicule lors de la première étape de mise en place ;
- l'élément expansible est relié à l'élément d'expansion ;
- l'élément expansible est un élément déformable élastiquement ;
- l'élément d'expansion est un élément déformable élastiquement ;
- l'organe de fixation provisoire est fixé sur la platine par des moyens de liaison du type à bouton et boutonnière ;
- les moyens de fixation définitive comportent une série de trous de fixation formés dans la platine pour le passage d'éléments de fixation définitive, par exemple du type vis-écrou ;
- l'organe de fixation provisoire est agencé sensiblement entre des trous de fixation.

L'invention propose également un module d'essuyage d'une vitre de véhicule automobile comportant une platine portant des organes d'entraînement d'au moins un essuieglace, caractérisé en ce que la platine comporte un agencement pour son montage et sa fixation sur un élément de la caisse du véhicule, réalisé conformément aux enseignements de l'invention.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective d'une partie d'un module d'essuyage d'une vitre de véhicule automobile dont la platine est équipée d'un agencement pour son montage et sa fixation réalisé conformément aux enseignements de l'invention ;
- la figure 2 est une vue en perspective à plus grande échelle de l'organe de fixation provisoire équipant le module d'essuyage illustré sur la figure 1 ;
- la figure 3 est une vue en section axiale de l'organe de fixation provisoire qui est illustré en association avec un élément appartenant à la caisse du véhicule, avant sa mise en oeuvre ; et
- la figure 4 est une vue similaire à celle de la figure 3 illustrant l'organe de fixation provisoire en position d'accrochage de la platine sur l'élément de la caisse du véhicule.

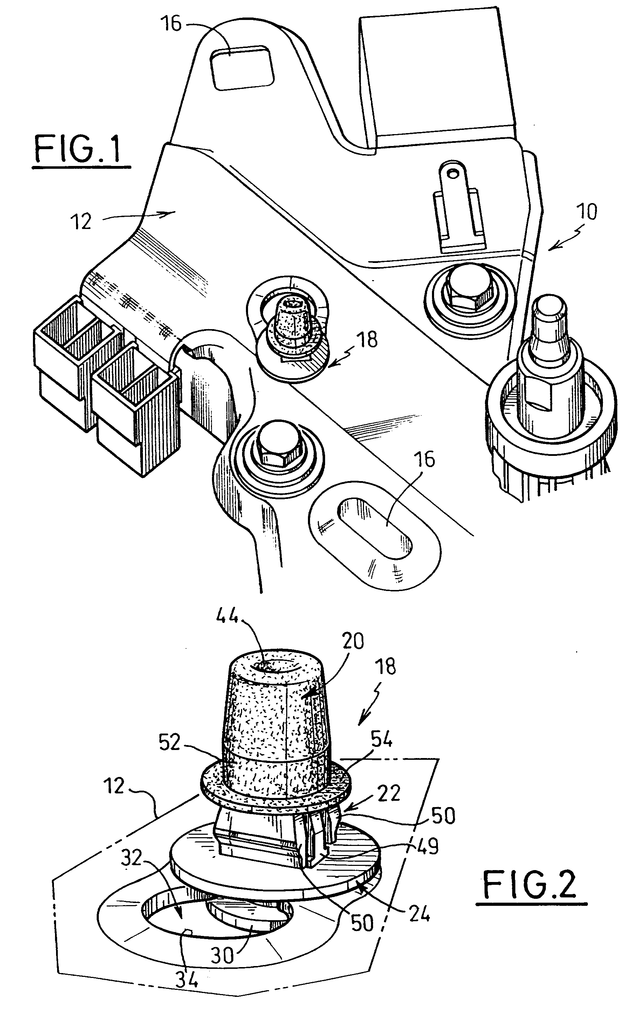

On a représenté sur la figure 1 une partie d'un module d'essuyage 10 constitué pour l'essentiel par une platine 12 qui est une pièce en tôle pliée et découpée.

La platine 12 porte différents organes (non représentés) pour l'entraînement en rotation alternée d'un arbre de sortie 14 destiné à recevoir un bras d'essuieglace, par exemple pour l'essuyage du pare-brise du véhicule.

Pour la fixation définitive de la platine 12 sur un élément de la caisse du véhicule, cette dernière comporte une série de trous ou de lumières 16 destinés à être traversés par les corps filetés de moyens de fixation définitive du type vis-écrou (non représentés).

Les trous ou lumières 16 sont orientés selon différentes directions de façon à permettre, avant le serrage complet des moyens de fixation définitive, un positionnement précis de la platine 12 par rapport à l'élément de la caisse du véhicule, selon différentes directions et orientations.

Conformément à l'invention, la platine 12 est équipée, dans sa partie située sensiblement au centre d'une série de trous de positionnement, d'un organe de fixation provisoire 18.

Comme on peut le voir en détail sur la figure 2, l'organe de fixation provisoire 18 est, selon une conception connue, une cheville expansible à mise en oeuvre par emboîtement élastique.

A cet effet, l'organe de fixation provisoire 18 comporte un élément supérieur expansible 20 réalisé en un matériau déformable élastiquement qui présente sensiblement un profil de révolution et un élément inférieur d'expansion 22 qui est porté par une embase 24 pour la fixation de l'organe de fixation provisoire 18 sur la platine 12.

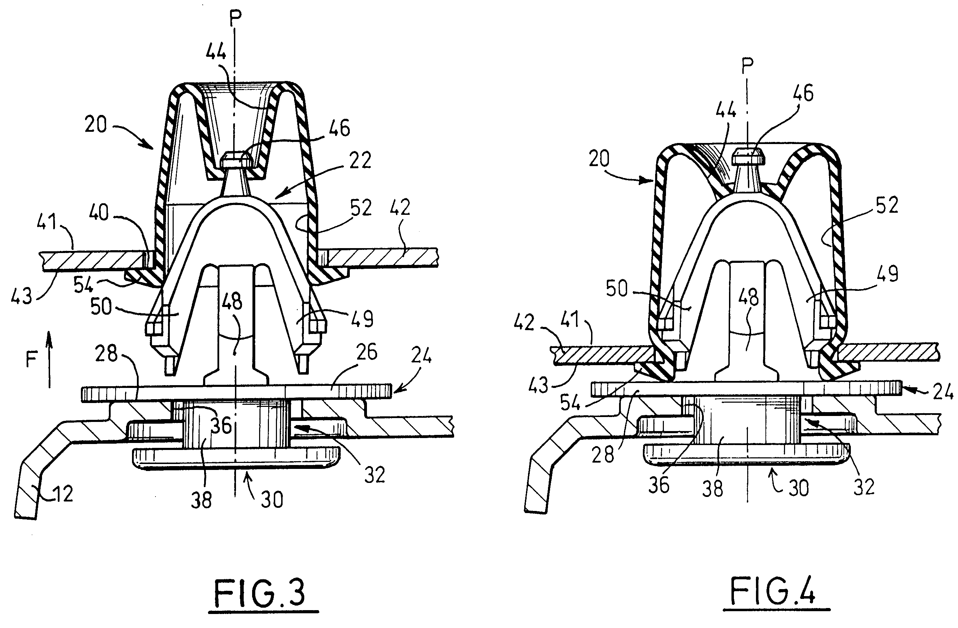

A cet effet, et comme on peut le voir notamment aux figures 2 et 3, l'embase 24 comporte une plaque circulaire 26 d'appui sur la face supérieure 28 de la platine 12 et un bouton inférieur de fixation 30 qui est prévu pour être reçu dans une boutonnière 32 formée dans la platine comportant un premier trou 34 de diamètre supérieur à celui du bouton 30 et un second trou 36, de diamètre inférieur à celui du bouton 30, qui est relié au premier trou 34 par une portion de raccordement permettant le passage du corps cylindrique 38 qui relie la plaque 26 au bouton 30.

On décrira maintenant plus en détail les éléments expansibles et d'expansion en se reportant à la figure 3.

L'élément expansible 20 se présente sous la forme d'une membrane de révolution qui, à l'état initial illustré sur la figure 3, est prévu pour pénétrer dans un trou de diamètre correspondant 40 formé à cet effet dans un élément 42 appartenant à la caisse du véhicule.

Le voile intérieur 44 de l'élément expansible 20 est accroché par un pion 46 à l'extrémité supérieure de l'élément d'expansion 22.

L'élément d'expansion 22 comporte un pied 48 pour sa liaison à la plaque d'appui 26, deux bras expansibles 50 agencés symétriquement par rapport au plan vertical de symétrie P représenté sur la figure 3, et une partie supérieure cylindrique de centrage et de guidage 52.

Les bras expansibles 50 sont susceptibles d'être déformés élastiquement en direction du plan P, en considérant la figure 3, de manière à permettre le passage par emboîtement élastique des bras à l'intérieur de la portion en forme de jupe 52 de l'élément expansible 20.

L'accrochage de la platine 12 sur l'élément 42 de la caisse du véhicule au moyen de l'organe de fixation provisoire s'effectue de la manière suivante.

L'opérateur, sans se soucier d'une orientation très précise de la platine 12 par rapport à la caisse du véhicule, approche la platine 12 selon la direction F, lors d'une première phase de mise en place, jusqu'à arriver dans la position illustrée sur la figure 3 dans laquelle l'élément expansible 20 a pénétré dans le trou 40.

L'opérateur poursuit son mouvement de mise en place, selon la flèche F de la figure 3 qui provoque le déplacement relatif en coulissement de l'élément d'expansion 22 à l'intérieur de l'élément expansible 20.

Lors de ce déplacement relatif, les bras expansibles 50 sont, dans un premier temps, comprimés pour passer à l'intérieur de la jupe 52 et du trou 40 puis se détendrent à nouveau élastiquement en éloignement du plan P de manière à provoquer l'immobilisation relative illustrée sur la figure 4.

La position d'accrochage illustrée sur la figure 4 est définie par la venue en appui de l'épaulement cylindrique inférieur 54 de la jupe 52 de l'élément expansible 20 contre la face inférieure en vis-à-vis 43 de la tôle 42.

Dans cette position géométrique précise, qui détermine également la position relative de la plaque d'appui 28 par rapport à la tôle 42, les bras 50 sont situés au-delà de la face supérieure 41 de la tôle 42 et immobilisent ainsi axialement la platine 12 par rapport à la tôle 42.

L'élément expansible 20 et l'élément d'expansion 22 possédant des grandes facultés de déformation selon la direction transversale, ils n'empêchent pas ultérieurement un déplacement relatif, selon cette même direction transversale, de la platine 12 par rapport à la tôle 42 afin de permettre un réglage précis de la postion de la platine 12 par rapport à la caisse du véhicule automobile avant l'étape finale de serrage des moyens de fixation définitive.

## Revendications

1. Agencement pour le montage et la fixation sur la caisse d'un véhicule automobile d'un ensemble comportant une platine (12) munie de moyens de fixation, caractérisé en ce que la platine (12) est équipée d'au moins un organe de fixation provisoire (18) permettant l'accrochage de la platine (12) sur la caisse du véhicule à l'issue d'une première étape de mise en place de la platine (12) et de moyens (16) de fixation définitive de la platine (12) à l'issue d'une seconde étape, notamment de réglage de la position de la platine par rapport à la caisse du véhicule.

2. Agencement selon la revendication 1, caractérisé en ce que l'organe de fixation provisoire (18) est mis en oeuvre par déplacement relatif de la platine (12) en direction (F) de la caisse (42) du véhicule.

3. Agencement selon la revendication 2, caractérisé en ce que l'organe de fixation provisoire (18) comporte un élément expansible (20) qui est reçu dans un trou complémentaire (40) de la caisse (42) du véhicule.

4. Agencement selon la revendication 3, caractérisé en ce que l'élément expansible (20) est susceptible de coulisser par rapport à un élément d'expansion (22) porté par la platine (12), selon une direction (F) sensiblement parallèle à la direction de déplacement de la platine (12) par rapport à la caisse (42) du véhicule, lors de la première étape de mise en place.

5. Agencement selon la revendication 4, caractérisé en ce que l'élément expansible (20) est relié à l'élément d'expansion (22).

6. Agencement selon l'une quelconque des revendications 3 à 5, caractérisé en ce que l'élément expansible (20) est un élément déformable élastiquement.

7. Agencement selon l'une des revendications 4 ou 5, caractérisé en ce que l'élément d'expansion (22) est un élément déformable élastiquement.

8. Agencement selon l'une quelconque des revendications précédentes, caractérisé en ce que l'organe de fixation provisoire (18) est fixé sur la platine (12) par des moyens de liaison du type à bouton (30) et boutonnière (32).

9. Agencement selon l'une quelconque des revendications précédentes, caractérisé en ce que les moyens de fixation définitifs comportent une série de trous de fixation (16) formés dans la platine (12) pour le passage d'éléments de fixation définitive, par exemple du type vis-écrou.

10. Agencement selon la revendication 9, caractérisé en ce que l'organe de fixation provisoire est agencé sensiblement au centre des trous de fixation.

11. Module (10) d'essuyage d'une vitre de véhicule automobile du type comportant une platine (12) portant des organes d'entraînement d'au moins un essuie-glace, caractérisé en ce que la platine (12) comporte un agencement (18), pour son montage et sa fixation sur un élément de la caisse du véhicule, réalisé conformément à l'une quelconque des revendications précédentes.
